# EUROPEAN PATENT SPECIFICATION

(11) **EP 1 437 195 B1**
(45) Date of publication and mention of the grant of the patent: **19.07.2006**
(21) Application number: 04000509.2
(22) Date of filing: 13.01.2004
(51) Int. Cl.: B23Q 1/25, B23Q 1/52, B23Q 16/04, B23Q 7/04

(54) **Machine tool**
Werkzeugmaschine
Machine outil

(30) Priority: 13.01.2003 IT MO20030004
(43) Date of publication of application: 14.07.2004
(73) Proprietor: Emmegi S.P.A., 41010 Limidi di Soliera (MO) (IT)
(72) Inventor: Caiumi, Andrea, 41012 Carpi (MO) (IT)
(74) Representative: Crugnola, Pietro

(56) References cited:
- EP-A- 0 558 982
- EP-A- 0 787 560
- US-A- 3 918 145

## Description

The invention concerns a machine tool, in particular for machining profiles that, after being assembled, constitute frames of doors and/or windows.

US-3 918 145 discloses a machine tool according to the preamble of claim 1. In US-3 918 145 a pair of ring-shaped work holding means is provided which can be rotated in unison by respective gears which mesh with a rack. A work clamp is mounted within each ring.

EP-787560 discloses a machine tool wherein a shaft is provided that is rotationally supported around its own longitudinal axis, whereupon a plurality of clamps is fitted that occupy consecutive sections of the shaft and have respective pairs of jaws that tighten and open to respectively grip a profile that has to be machined and open at the end of a machining cycle.

Above the shaft a spindle-bearing head is supported that is controlled on three axes that are at right angles to one another, by which one or more tools can be made to interact with those zones of the profile that have to be machined.

In said machine tool, when a face of the profile has to be machined that does not initially face the spindle-bearing head, it is provided for that the shaft bearing the clamps is rotated by an appropriate angle until the face to be machined is arranged in a position that is at right angles to the axis of the spindle.

For this reason, when profiles have to be machined that have a shape that is substantially contained within a parallelepiped wherein three lateral faces have to be machined, the shaft must perform three rotations of 90° in order to present the faces of the profile to the spindle-bearing head one after the other.

A first defect of said machine is that it is rather problematic to machine all the faces of a profile because the face turned towards the shaft bearing the clamps cannot be turned towards the spindle-bearing head. In fact, the shaft is always interposed between the latter and the profile, so that a tool fitted to the spindle-bearing head is unable to simply access that face due to the space taken up by the shaft.

A second defect of said machine is that when the shaft is rotated after machining of a given face has terminated in such a way that an adjacent face can be machined, the latter is at a distance from the spindle-bearing head that is different from the distance of that given face.

This derives from the intrinsic construction of the entire shaft and of the clamps fitted thereupon, inasmuch as the clamps protrude radially from the shaft by an amount that is at least the same as the maximum dimension of the profile that they have to accommodate. Therefore, in a first configuration in which the clamps are positioned towards the spindle-bearing head, the distance between the tool and the surface of the profile facing it is less than the distance detected between a second configuration in which the clamps are rotated, for example by 90°, in relation to the first configuration.

This causes unequal machining times between the different configurations inasmuch as the tool has to perform a stroke to bring it up to the face to be machined that is greater in the second configuration than in the first configuration, which negatively affects the productivity of the machine.

One object of the invention is to improve prior-art machine tools.

A further object is to make it possible to machine all the faces of a profile.

Another object is to make substantially uniform the strokes of a tool that is brought up to the different faces of a profile that is to be machined.

According to the invention, a machine tool is provided, having the features of claim 1.

In this way, as the longitudinal axis of the profile can coincide, or almost coincide with the rotation axis of the support means of the clamps the stroke bringing up the tool to the face to be machined remains virtually the same in the different angular positions taken up by the support means.

Furthermore, by suitably conforming the support means it is also possible to machine the face of a profile turned towards the support means.

The invention may be better understood and implemented with reference to the attached drawings, which illustrate some nonlimiting examples of embodiments, wherein:
Figure 1 is a perspective view of a machine according to the invention;
Figure 2 is a schematic perspective view of a variation of the support means;
Figure 3 is an enlarged and interrupted perspective view of one of the heads of the machine in Figure 1, taken from one side;
Figure 4 is a view like the one in Figure 3, but taken from the opposite side;
Figure 5 is a raised front view of Figure 1;
Figure 6 is a perspective view of only the heads of a machine like the one in Figure 1, but in a further variation;
Figure 7 is a side view of Figure 6;
Figure 8 is a view from the right of Figure 7;
Figure 9 is a partially cross-sectioned view of the drive zone of the movement between each head and the respective internal ring associated therewith;
Figure 10 is a longitudinal cross-section of a drive of the rotational movement between two heads of the machine;
Figure 11 is a transversal cross-section taken along plane XI-XI of Figure 10;
Figure 12 is a transversal cross-section taken along plane XII-XII of Figure 10.

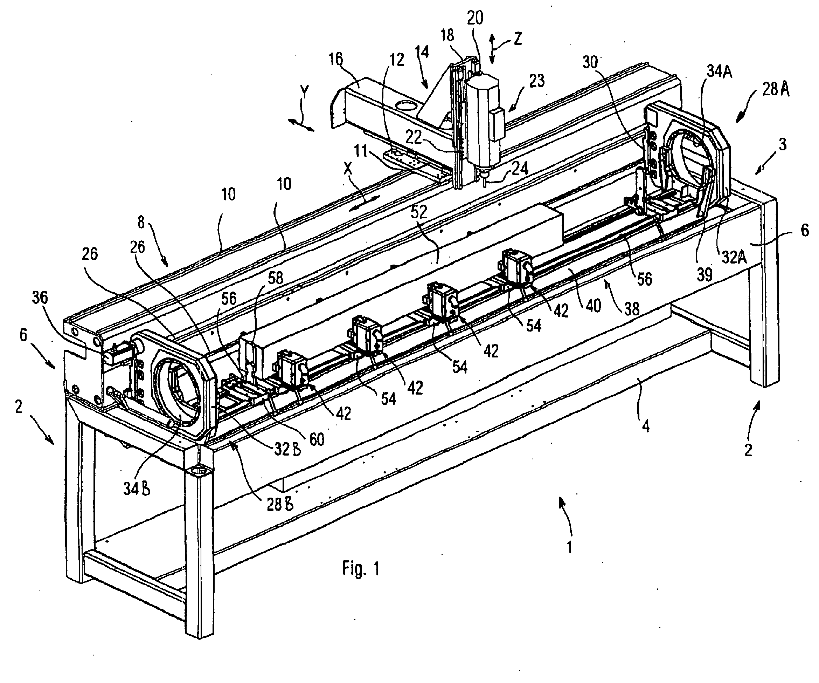

Figure 1 shows a machine tool 1 provided with a bed 3 formed by a pair of end frames 2 connected by a bottom stringer 4 and a pair of top stringers 6.

One of the top stringers 6 is located in the part of the machine 1 that is accessible to an operator whilst the other longitudinal stringer 6 is connected to a longitudinal guide body 8 that is provided above with a pair of longitudinal guide elements 10 defining an axis X whereupon a first carriage 12 runs in a controlled manner.

On the first carriage 12 a pair of transversal guide elements 11 is fitted that define a transversal Y axis that is at right angles to the X axis.

On the pair of transversal guide elements 11 a support element 14 is mobile in a controlled manner that is provided with a base plate 16 and an upright plate 18 on which a pair of vertical guides 20 are fitted, on said pair of vertical guides 20 a vertical carriage 22 is mobile in a controlled manner along a Z axis, that vertical carriage 22 supports a motor-driven spindle 23 whereupon a tool 24 is fitted, for example an end mill.

On the side of the longitudinal guide body 8 turned towards the inside of the bed 3 a pair of longitudinal positioning guides 26 is fitted that lie on a vertical plane to which a first head 28A and a second head 28B are fixed by means of movable connection members.

The first head 28A comprises first ring means and the second head 28B comprises second ring means.

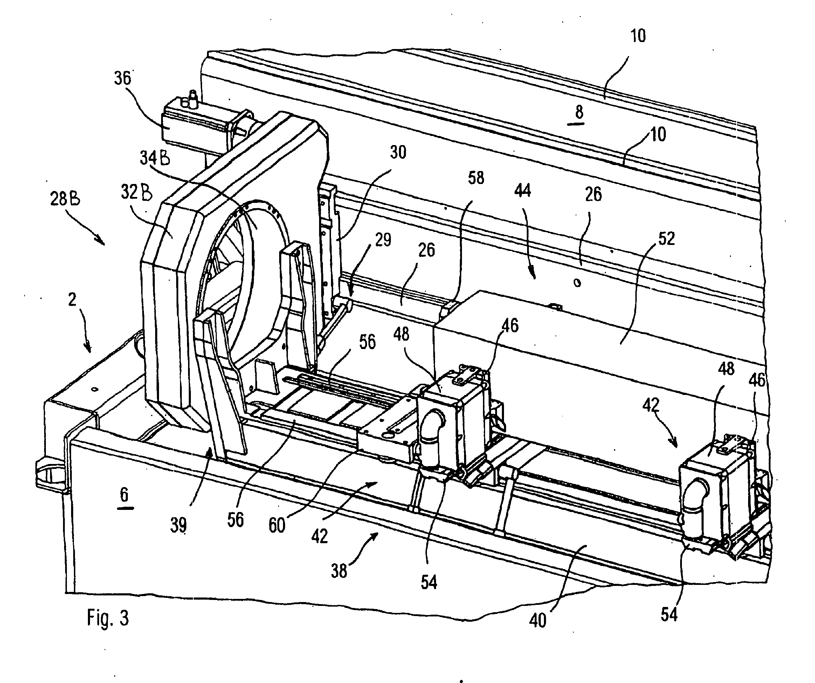

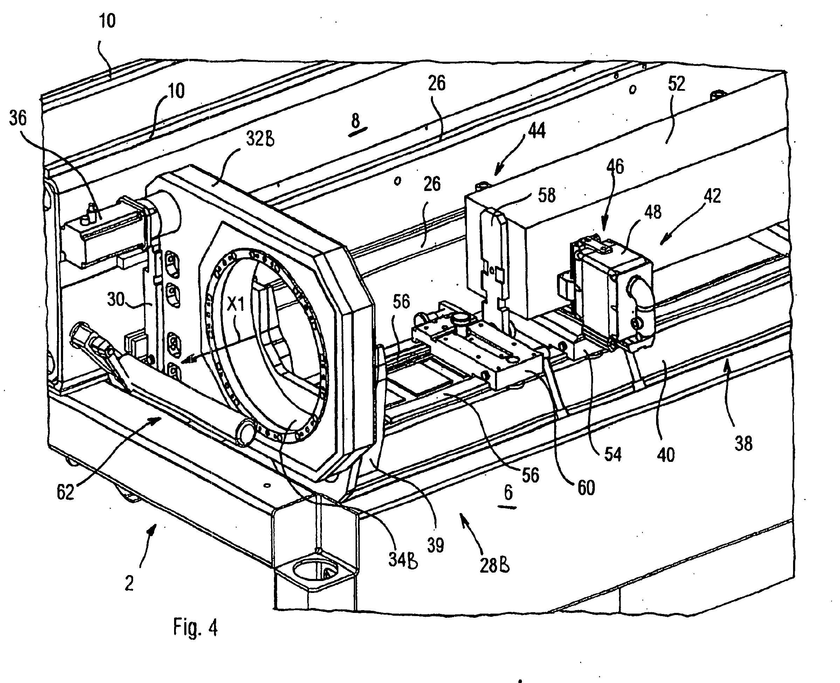

As Figures 3 and 4 show, each head 28A, 28B is equipped with a coupling element 30 by means of which a non-rotating external ring 32A, 32B of each head 28A, 28B can be stably coupled with a preset cross section of the pair of positioning guides 26 by means of a rapid-gripping device 29 with an eccentric.

Inside each first and second external ring 32A, 32B a corresponding internal ring 34A, 34B is rotationally supported that can be positioned angularly in relation to the external stationary ring 32A, 32B by means of an appropriate gearmotor 36 supported on the external stationary ring 32A, 32B.

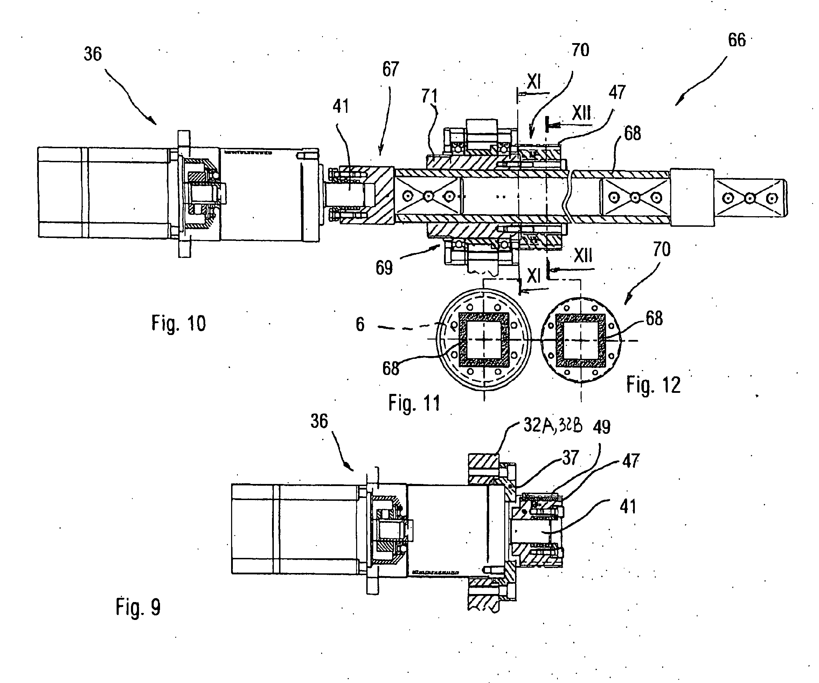

As shown in Figure 9, the gearmotor 36 is fixed to the external ring 32A, 32B by means of a plate 37 and has an outlet shaft 41 whereupon a sprocket 47 is splined that engages a toothed belt 49 wound around a toothed crown (not shown) that is integral with the internal ring 34A, 34B.

The internal rings 34A, 34B of the heads 28A, 28B are connected to one another by a connection structure 38 comprising a pair of profiled elements 39 having a U shape between which a connection beam 40 extends. On the connection beam 40 a plurality of clamps 42 is fitted that occupy consecutive sections of the connection beam 40 and each one of which is provided with a limit element 44 and with a presser element 46, the latter being actuated by a pneumatic operating cylinder 48 controlled by a solenoid valve 50. In this way, a profile 52 to be machined can be made integral with the connection beam 40 and, through the latter, with the internal ring 34 for the entire duration of a machining cycle and be removed after the cycle has finished.

The clamps 42 are positionable along the connection beam 40 in such a way that it is possible to choose the sections of the profile 52 to be machined that must be occupied by the clamps 42 and on which tool machining therefore have not be performed. To adjust the position of the clamps 42 along the connection beam 40 the latter is provided with a pair of adjusting guides 56 whereupon movable connection elements 54 are engaged, for example a quick-action clamp acting as a base body of each clamp 42.

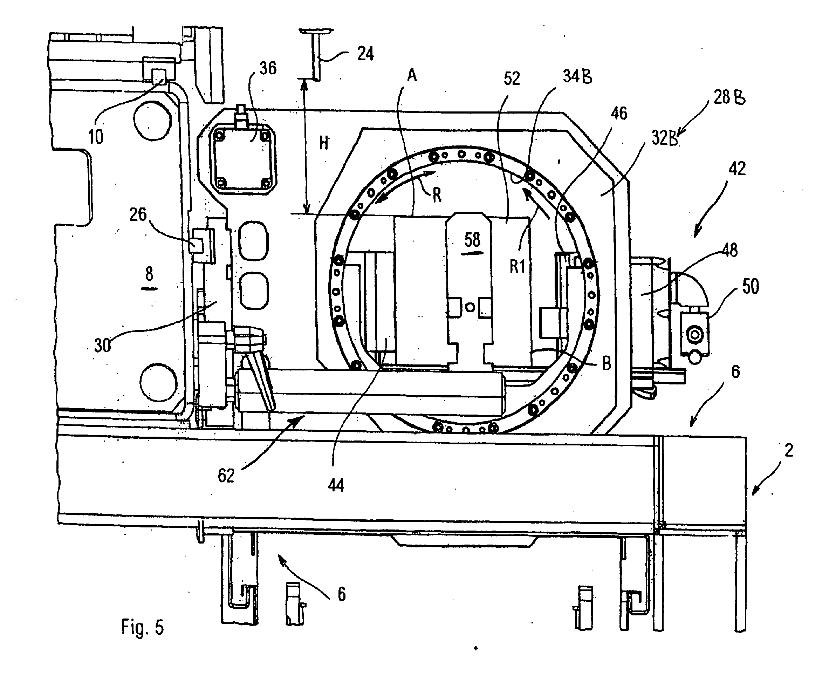

As shown in Figure 5, the position of the clamps 42 and of the connection beam 40 that holds the profile 52 in place towards the centre of the internal rings 34A, 34B enables any face of the profile 52 to be taken through rotation indicated by the arrow R towards the tool 24 without noticeable variations occurring in the distance H defined by the machining end of the tool 24 and the face of the profile 52 turned towards said tool.

In other words, the distance H does not suffer substantial variations if a face A or a face B next to face A has to be machined after an anticlockwise rotation R1 of 90° of the profile 52 has occurred.

On the adjustment guides 56 a stop 58 is furthermore adjustably supported that is arranged for the longitudinal positioning of the profile 52 against it before gripping by the clamps 42.

Also the stop 58 is fixed to the adjustment guides 56 by means of quick-action clamps 60, in the same way as the clamps 42. Outside one of the heads 28 a roller element 62 is fitted to the guide body 8 that enables the profile 52 to be shifted from the bed 3 in an axial direction along the direction indicated by the arrow X1.

Thus, in the machine disclosed above, both the feeding of a profile 52 towards a machining configuration identified by the clamps 42 and by the stop 58 and the removal of the profile 52 from the machining configuration can occur via the central part of the internal ring 34 that acts as a transit tunnel for the profile 52.

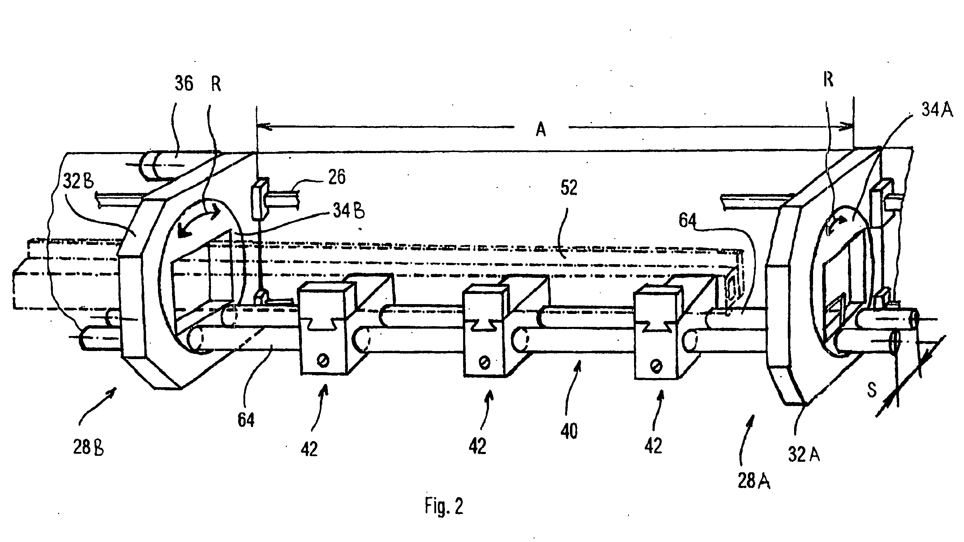

As shown in Figure 2, the connection beam 40 may comprise a pair of longitudinal bar elements 64 that are spaced apart from each other in such a way as to leave a sufficient space S to enable the tool 24 to pass through them when the internal ring 24 is rotated until the face of the profile 24 is turned towards the connection beam 40 in a position facing the tool 24. In this way, it is possible to machine all the faces of the profile 52.

Note that the distance between the heads 28A, 28B can be regulated by manually adjusting the positioning elements 30 after releasing the rapid gripping devices 29 and shifting the heads 28A, 28B in the direction indicated by the X axis.

In an embodiment that is not shown, the heads 28A, 28B can be equipped with linear shifting members parallel to the X axis, for example constituted by a rack fixed to the guide body 8 whereupon a motor-driven reel is located on each head 28.

In this way it is possible to bring the heads 28A, 28B close to one another or to place them further apart until the distance A is automatically reached that is required by the longitudinal dimensions of the profile 52 to be machined.

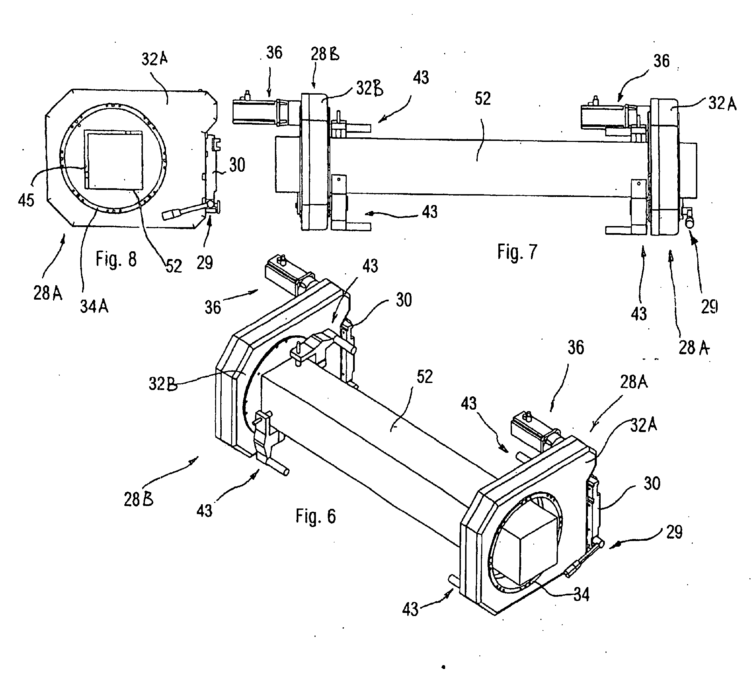

In the embodiment illustrated in Figures 6 to 8, the connection beam is not necessary, but in this case each gearmotor 36 unit actuating the first ring 34A must be synchronised with the gearmotor 36 unit actuating the second internal ring 34B. Clamps 43 are thus provided that are fitted to the internal rings 34A, 34B by means of a connection plate 45 to keep the profile 52 integral with the internal rings 34A, 34B in any angular configuration.

As the connection beam is eliminated, each face of the profile 52 is very easily accessible by the tool 24.

The absence of the connection beam makes it possible to use a head 28A, 28B that shifts axially in a direction that is parallel to the X axis as a feed device of a profile 52 to be machined or as an ejection device of a profile 52 that has already been machined.

In said operating mode, the first head 28A, for example the one shown on the right in Figure 2, or in Figure 7, after being shifted to receive an end of a profile 52 near its clamps 43 and after tightening them to grip the end therein, is shifted by a length A to take the end to a zone in which it can be loaded by the clamps 43 of the other head, and then move off to take up a machining configuration.

Naturally, in a machine like the one disclosed above, more than two heads 28A, 28B can also be fitted.

Figures 10 to 12 show a mechanical drive 66 that transmits the movement between a plurality of heads 28 by exploiting the rotation of just one gearmotor 36 unit.

In this case, the outlet shaft 41 is coupled by a joint 67 with a drive shaft 68 that has an external shape that is such as to transmit torque to a sleeve 71 that is free to run along said shaft. In particular, the drive shaft 68 has a square or in general a grooved profile. The sleeve 71 is fitted by bearings onto the external ring 32A, 32B of the head 28A, 28B and has a portion 70 that is integral therewith that is externally toothed to transmit the rotation movement to the belt 47.

## Claims

1. Machine tool, comprising clamp means (42) arranged to grip or respectively release a workpiece (52) being machined, said clamp means (42) being coupled with support means (32A, 32B, 34A, 34B) angularly positionable around a longitudinal axis of said workpiece (52), said support means (32A, 32B, 34A, 34B) comprising first ring means (32A, 34A) and second ring means (32B, 34B) arranged in such a way as to surround said longitudinal axis, **characterised in that** an inner ring (34A) of said first ring means (32A, 34A) is connected to a corresponding inner ring (34B) of said second ring means (32B,34B) by a connection structure (38) on which said clamp means (42) is positioned.

2. Machine tool according to claim 1, and further comprising a bed (3) developing longitudinally along said axis and being provided with a guide body (8) at its own longitudinal stringer (6).

3. Machine tool according to claim 2, wherein said ring means (32A, 32B, 34A, 34B) is positionable along positioning guides (26) of said bed (3) through coupling means (30).

4. Machine tool according to claim 3, wherein said ring means (32A, 32B, 34A, 34B) is shiftable along said positioning guides (26) through linear shifting means.

5. Machine tool according to claim 3, wherein said coupling means comprises quick-action clamps (29) interposed between said positioning guides (26) and said ring means (32A, 32B, 34A, 34B).

6. Machine tool according to any preceding claim, wherein to an outer ring (32A, 32B) of said ring means (32A, 32B, 34A, 34B) gearmotor means (36) is fixed that is arranged to actuate said inner ring (34A, 34B) in such a way as to position the latter in a desired angular position.

7. Machine tool according to claim 6 as appended to any one of claims 3 to 5, wherein a plurality of heads (28) is fitted to said positioning guides (26) and the gearmotor means (36) of each head is synchronised with the gearmotor means (36) of the other heads (28) by synchronisation means (66) in such a way that all the inner rings (34) of the different heads (28) rotate by angular steps that are the same as one another in a synchronous manner.

8. Machines tool according to claim 7, wherein said synchronisation means is electronic means/electric synchronisation means.

9. Machine tool according to claim 8, wherein said synchronisation means (66) comprises drive shaft means (68) arranged in such a way as to enable a rotating movement to be transmitted to each of said heads (28) leaving each of said heads (28) free to take up a desired axial position.

10. Machine tool according to claim 9, wherein said drive shaft means (68) is engaged by means of bearing means (69) with said outer ring (32).

11. Machine tool according to any preceding claim, wherein said clamp means (42) is coupled with adjustment guide means (56) integral with said connection structure (38) in such a way that said clamp means (42) can be positioned at desired sections of said adjustment guide means (56).

## Patentansprüche

1. Werkzeugmaschine mit einem Klemmmittel (42), das angeordnet ist, um ein zu bearbeitendes Werkstück (52) zu greifen oder entsprechend freizugeben, wobei das Klemmmittel (42) mit einem Abstützmittel (32A, 32B, 34A, 34B) gekoppelt ist, welches bezüglich des Winkels um eine Längsachse des Werkstücks (52) positionierbar ist, wobei das Abstützmittel (32A, 32B, 34A, 34B) ein erstes Ringmittel (32A, 34A) und ein zweites Ringmittel (32B, 34B) aufweist, die so angeordnet sind, dass sie die Längsachse umgeben, **dadurch gekennzeichnet, dass** ein innerer Ring (34A) des ersten Ringmittels (32A, 34A) mit einem entsprechenden inneren Ring (34B) des zweiten Ringmittels (32B, 34B) über eine Verbindungsstruktur (38) verbunden ist, auf der das Klemmmittel (42) positioniert ist.

2. Werkzeugmaschine nach Anspruch 1, und ferner mit einem Bett (3), das sich in Längsrichtung entlang der Achse erstreckt und mit einem Führungskörper (8) an seinem eigenen Längsträger (6) versehen ist.

3. werkzeugmaschine nach Anspruch 2, wobei das Ringmittel (32A, 32B, 34A, 34B) entlang von Positionierungsführungen (26) des Betts (3) über Kupplungsmittel (30) positionierbar ist.

4. Werkzeugmaschine nach Anspruch 3, wobei das Ringmittel (32A, 32B, 34A, 34B) entlang der Positionierungsführungen (26) über lineare Verschiebungsmittel verschiebbar ist.

5. Werkzeugmaschine nach Anspruch 3, wobei das Verbindungsmittel schnellwirkende Klemmen (29) aufweist, die zwischen den Positionierungsführungen (26) und den Ringmitteln (32A, 32B, 34A, 34B) angeordnet sind.

6. Werkzeugmaschine nach einem vorhergehenden Anspruch, wobei ein äußerer Ring (32A, 32B) an einem Getriebemotormittel (36) befestigt ist, der angeordnet ist, um den inneren Ring (34A, 34B) in einer Weise zu betätigen, um den letztgenannten in eine gewünschte Winkelposition zu positionieren.

7. Werkzeugmaschine nach Anspruch 6, in Abhängigkeit von einem der Ansprüche 3 bis 5, wobei eine Vielzahl von Köpfen (28) in die Positionierungsführungen (26) eingepasst ist und das Getriebemotormittel (36) jedes Kopfs synchronisiert ist mit dem Getriebemotormittel (36) der anderen Köpfe (28) über Synchronisationsmittel (66) derart, dass alle inneren Ringe (34) der unterschiedlichen Köpfe (28) sich um zueinander gleiche Winkelschritte in einer synchronen Weise drehen.

8. werkzeugmaschine nach Anspruch 7, wobei das Synchronisationsmittel ein elektronisches Mittel/elektrisches Synchronisationsmittel ist.

9. Werkzeugmaschine nach Anspruch 8, wobei das Synchronisationsmittel (66) ein Antriebswellenmittel (68) aufweist, das in einer Weise angeordnet ist, um eine Drehbewegung zu ermöglichen, die auf jeden der Köpfe (28) übertragen wird, um es jedem der Köpfe (28) frei zu ermöglichen, eine gewünschte axiale Position einzunehmen.

10. Werkzeugmaschine nach Anspruch 9, wobei das Antriebswellenmittel (68) mit dem äußeren Ring (32) über ein Lagermittel (69) zusammenwirkt.

11. Werkzeugmaschine nach einem vorhergehenden Anspruch, wobei das Klemmmittel (42) mit einem Einstellführungsmittel (56) gekoppelt ist, das mit der Verbindungsstruktur (38) einstückig ausgebildet ist derart, dass das Klemmmittel (42) in gewünschten Abschnitten des Einstellführungsmittels positioniert werden kann.

## Revendications

1. Machine-outil, comprenant des moyens de serrage (42) prévus pour bloquer ou respectivement libérer une pièce (52) en cours d'usinage, lesdits moyens de serrage (42) étant couplés à des moyens de support (32A, 32B, 34A, 34B) positionnables angulairement autour d'un axe longitudinal de ladite pièce à usiner (52), lesdits moyens de support (32A, 32B, 34A, 34B) comprenant des premiers moyens annulaires (32A, 34A) et des deuxièmes moyens annulaires (32B, 34B) agencés de manière à entourer ledit axe longitudinal, ***caractérisée en ce qu'***un anneau intérieur (34A) desdits premiers moyens annulaires (32A, 34A) est raccordé à un anneau intérieur correspondant (34B) desdits deuxièmes moyens annulaires (32B, 34B) par une structure de raccordement (38) sur laquelle sont placés lesdits moyens de serrage (42).

2. Machine-outil selon la revendication 1, et comprenant de plus un banc (3) se développant longitudinalement le long dudit axe et qui est équipé d'un corps de guidage (8) sur son propre longeron (6).

3. Machine-outil selon la revendication 2, dans laquelle lesdits moyens annulaires (32A, 32B, 34A, 34B) sont positionnables le long de guides de positionnement (26) dudit banc (3) par l'intermédiaire de moyens de couplage (30).

4. Machine-outil selon la revendication 3, dans laquelle lesdits moyens annulaires (32A, 32B, 34A, 34B) sont déplaçables le long desdits guides de positionnement (26) par l'intermédiaire de moyens de déplacement linéaire.

5. Machine-outil selon la revendication 3, dans laquelle lesdits moyens de couplage comprennent des pinces à serrage rapide (29) interposées entre lesdits guides de positionnement (26) et lesdits moyens annulaires (32A, 32B, 34A, 34B).

6. Machine-outil selon l'une quelconque des revendications précédentes, dans laquelle, à un anneau extérieur (32A, 32B) desdits moyens annulaires (32A, 32B, 34A, 34B), est fixé un moyen (36) de moteur à engrenages qui est agencé pour manoeuvrer ledit anneau intérieur (34A, 34B) de manière à positionner ce dernier dans une position angulaire désirée.

7. Machine-outil selon la revendication 6 telle que dépendante de l'une quelconque des revendications 3 à 5, dans laquelle une pluralité de têtes (28) sont fixées sur lesdits guides de positionnement (26) et le moyen (36) de moteur à engrenages de chaque tête est synchronisé avec le moyen (36) de moteur à engrenages des autres têtes (28) grâce à des moyens de synchronisation (66) d'une façon telle que tous les anneaux intérieurs (34) des différentes têtes (28) tournent de manière synchrone selon des pas angulaires qui sont iden tiques les uns aux autres.

8. Machine-outil selon la revendication 7, dans laquelle lesdits moyens de synchronisation sont des moyens électroniques/moyens de synchronisation électriques.

9. Machine-outil selon la revendication 8, dans laquelle lesdits moyens de synchronisation (66) comprennent des moyens d'arbre d'entraînement (68) agencés de manière à permettre la transmission d'un mouvement rotatif à chacune desdites têtes (28) en laissant chacune desdites têtes (28) libre d'adopter une position axiale désirée.

10. Machine-outil selon la revendication 9, dans laquelle lesdits moyens d'arbre d'entraînement (68) sont en prise par l'intermédiaire d'un moyen de palier (69) avec ledit anneau extérieur (32).

11. Machine-outil selon l'une quelconque des revendications précédentes, dans laquelle lesdits moyens de serrage (42) sont couplés à des moyens de guide de réglage (56) solidaires de ladite structure de raccordement (38) de façon que lesdits moyens de serrage (42) puissent être positionnés sur des sections désirées desdits moyens de guide de réglage (56).
